# EUROPÄISCHE PATENTSCHRIFT

(11) **EP 3 702 225 B1**
(45) Veröffentlichungstag und Bekanntmachung des Hinweises auf die Patenterteilung: **22.09.2021**
(21) Anmeldenummer: 20152104.4
(22) Anmeldetag: 16.01.2020
(51) Int. Cl.: B60R 22/02, B60R 22/20, B60R 22/26, B60N 2/68

(54) **RÜCKHALTESYSTEM FÜR EINEN FAHRZEUGSITZ**
RETENTION SYSTEM FOR A VEHICLE SEAT
SYSTÈME DE RETENUE POUR UN SIÈGE DE VÉHICULE

(30) Priorität: 27.02.2019 DE 102019104923
(43) Veröffentlichungstag der Anmeldung: 02.09.2020
(73) Patentinhaber: GRAMMER AG, 92289 Ursensollen (DE)
(72) Erfinder: Pelka, Joachim, 92224 Amberg (DE)
(74) Vertreter: Hannke, Christian

(56) Entgegenhaltungen:
- WO-A1-2018/167945
- US-A- 5 358 310

## Beschreibung

Die Erfindung betrifft ein Rückhaltesystem für einen Fahrzeugsitz gemäß dem Oberbegriff des Anspruchs 1.

Gattungsgemäße Rückhaltesysteme sind an vielen Fahrzeugsitzen angeordnet und dazu vorgesehen, den Insassen eines dazugehörigen Fahrzeugs bei einem Unfall, also wenn schlagartig starke Verzögerungen auf den Insassen wirken, rückzuhalten und ihn somit davor zu schützen, durch das Fahrzeug oder aus diesem hinaus geschleudert zu werden. Das Rückhaltesystem umfasst dabei beispielsweise ein Gurtbandelement, welches beispielsweise als Teil eines 3-Punkt-Gurt-Systems angeordnet ist. Dieses Gurtbandelement ist insbesondere schräg über den Brust- und Bauchbereich des Insassen gelegt und beispielsweise mittels einer oberhalb eines Schulterbereichs des Insassen angeordneten Umlenkvorrichtung nach unten umgelenkt. Am Gurtbandelement ist ein Schlosszungenelement verschiebbar angeordnet. Im Fahrzeug, beispielsweise in der Höhe einer Sitzfläche für den Insassen, ist ferner ein Gurtschloss angeordnet, in welches die Schlosszunge einrasten kann, womit ein gesicherter Zustand des Insassen ausgebildet ist.

Um für Insassen verschiedener Körpergrößen zu gewährleisten, dass die Position der Umlenkvorrichtung jeweils knapp oberhalb der Schulter des Insassen angeordnet ist, sind aus dem Stand der Technik Vorrichtungen zur individuellen Anpassung dieser Position in Bezug auf eine Höhenrichtung des Fahrzeugsitzes bekannt. Beispielsweise kann hierzu ein Stiftelement der Umlenkvorrichtung innerhalb einer Nut der Karosserie bis zu einer gewünschten Position verschoben werden.

US 5 358 310 A zeigt ein Rückhaltesystem für einen Fahrzeugsitz, welches ein Gurtbandelement zum Rückhalten eines Insassen des Fahrzeuges umfasst. Ebenso liegt ein Leitbandelement, welches auf einer Führungsbahn laufend geführt ist, vor. Ein Halteelement ist positionssicher mit einem ersten Abschnitt des Leitbandelementes verbunden. Das Gurtbandelement ist durch eine Aussparung des Halteelementes hindurchgehend geführt.

Aufgabe der vorliegenden Erfindung ist es, die gängigen Rückhaltesysteme zu verbessern und insbesondere die Positionssicherheit der Umlenkvorrichtung zu erhöhen.

Die Aufgabe der vorliegenden Erfindung wird gelöst von einem Rückhaltesystem für einen Fahrzeugsitz, umfassend ein Gurtbandelement zum Rückhalten eines Insassen des Fahrzeugsitzes, weiter umfassend ein Leitbandelement, welches auf einer Führungsbahn laufend geführt ist, wobei ein Halteelement positionssicher mit einem ersten Abschnitt des Leitbandelements verbunden ist, wobei das Gurtbandelement durch eine Aussparung des Halteelements hindurchgehend geführt ist. Erfindungsgemäß ist vorgesehen, dass das Leitbandelement in sich geschlossen ist, wobei mittels einer Bewegung des Leitbandelements auf der Führungsbahn in einer ersten Umlaufrichtung das Halteelement innerhalb eines Verstellabschnitts der Führungsbahn stufenlos von einer zweiten bis zu einer ersten Maximalposition verstellbar ist.

Als Bandelement (Leitbandelement oder Gurtbandelement) ist im Sinne der vorliegenden Erfindung ein Element zu verstehen, dessen Länge größer ist als seine Breite und seine Höhe und dessen Breite größer ist als seine Höhe. Während ein offenes Bandelement in Längsrichtung zwei Enden aufweist, bildet ein in sich geschlossenes Bandelement in Längsrichtung eine geschlossene Kurve aus und weist somit einen geschlossenen Umfang auf. Beispiele für derartige Bandelemente sind Riemen, Transportbänder etc.

Das Leitbandelement weist wie oben beschrieben einen Querschnitt senkrecht zur ersten Umlaufrichtung auf, welcher bevorzugt in Form eines Rechtecks ausgestaltet ist. Bevorzugt ist eine erste Länge (entspricht der Breite des Leitbandelements) der sich gegenüberliegenden ersten Kanten des Rechtecks größer, mehr bevorzugt wesentlich größer als eine zweite Länge (entspricht der Höhe des Leitbandelements) der sich gegenüberliegenden zweiten Kanten des Rechtecks. Die zweite Länge kann auch als Höhe oder Dicke des Leitbandelements bezeichnet werden. Bevorzugt ist jeweils eine der ersten Kanten der ersten Seite oder der zweiten Seite des Leitbandelements zugeordnet. Es kann angenommen werden, dass der Normalenvektor der ersten Seite und der Normalenvektor der zweiten Seite des Leitbandelements stets senkrecht zur ersten Umlaufrichtung ausgestaltet sind.

Es ist bevorzugt vorgesehen, dass alle erdenklichen Positionen des Halteelements, welche dieses in Bezug auf einen Verlauf der Führungsbahn annimmt, innerhalb des Verstellabschnitts angeordnet sind. Das Halteelement übernimmt die Funktion des Tragelements des Gurtbandelements. Dabei ist das Gurtbandelement zwar innerhalb der Aussparung des Halteelements geführt, ansonsten aber zu diesem beweglich ausgestaltet.

Bevorzugt erfährt das Halteelement bei einer Verstellung wie oben beschrieben lediglich eine Translationsbewegung und/oder keine Rotationsbewegung. Bevorzugt ist die Umlaufrichtung und/oder das Leitbandelement innerhalb des Verstellbereichs geradlinig verlaufend ausgestaltet.

Die vorliegende Erfindung gewährleistet also eine stufenlose und spielarme Anbringung des Rückhaltesystems an einem Sitz durch die Führung des Halteelements mittels des umlaufenden Leitbandelements. Es ist somit eine weitaus sicherere Lagerung des Leitbandelements möglich, da dies durch seine geschlossene Gestalt zwei mögliche Umlaufrichtungen aufweist. Bevorzugt sind die beiden Umlaufrichtungen zueinander gegenläufig. Dabei entspricht die zweite Umlaufrichtung in Bezug auf einen Verlauf der Führungsbahn bevorzugt der Richtung von der ersten zur zweiten Maximalposition hin. Ferner entspricht die erste Umlaufrichtung in Bezug auf einen Verlauf der Führungsbahn bevorzugt der Richtung von der zweiten zur ersten Maximalposition hin. Bewegungen des Leitbandelements in die eine oder in die andere Richtung sind somit separat voneinander ansteuerbar.

Des Weiteren ist für eine einfache Anbringung des Rückhaltesystems an einen Sitz mit wenig nötigen Bauteilen gesorgt, was die Kosten minimiert. Es ist dafür gesorgt, dass die individuell gewünschte Position des Halteelements ergonomisch günstig und manuell verstellt werden kann.

Das Leitbandelement ist beispielsweise ein Polyesterband und weist bevorzugt eine geringe Dehnbarkeit auf. Auf dem Leitbandelement ist das Halteelement positionssicher montiert; beispielsweise ist das Halteelement mittels einer Klebeverbindung mit einer oder zwei Seiten des Leitbandelements verbunden. Alternativ oder kumulativ kann das Halteelement zwei Teile umfassen, wovon der eine auf einer ersten Seite des Leitbandelements und der andere auf einer zweiten Seite des Leitbandelements angeordnet ist. Beispielsweise sind diese zwei Teile miteinander mittels einer Clipsverbindung oder einer Schraubverbindung miteinander verbunden.

Es ist bevorzugt, dass das Leitbandelement im ersten Abschnitt bei montiertem Halteelement eine Einschnürung seines Querschnitts ausbildet. Mit anderen Worten ist das Leitbandelement mittels des Halteelements bevorzugt mit einer Kraft in Form einer Flächenpressung beaufschlagt.

Das Gurtbandelement weist bevorzugt ebenfalls einen rechteckig ausgestalteten Querschnitt auf. Die Aussparung im Halteelement für das Gurtbandelement ist bevorzugt komplementär zum Querschnitt des Gurtbandelements und/oder rechteckig ausgestaltet.

Dieses Prinzip, ein Gurtbandelement mittels eines umlaufenden Leitbandelements zu führen, ist neu. Es kann hier ein vergleichsweise hoher Hub, also ein vergleichsweise großer Abstand zwischen den beiden Maximalpositionen des Halteelements bereitgestellt werden. Beispielsweise ist hier ein Hub von 100 mm möglich; aus dem Stand der Technik bekannt sind Werte von nur etwa 50 mm.

Um eine Sicherung der gewünschten Position des Halteelements zu gewährleisten, ist es erfindungsgemäß vorgesehen, dass die Führungsbahn einen vom Verstellabschnitt getrennt angeordneten Reibabschnitt ausbildet. Es ist im Reibabschnitt eine Bremseinheit für das Leitbandelement angeordnet. Die Bremseinheit umfasst eine auf einer ersten Seite des Leitbandelements angeordnete Reibradeinheit sowie eine auf einer zweiten Seite des Leitbandelements angeordnete und mit der Reibradeinheit wechselwirkbare Bremsbackeneinheit.

Die Reibradeinheit bildet vorteilhaft einen Reibkontakt zur ersten Seite des Leitbandelements aus. Die Bremsbackeneinheit bildet vorteilhaft einen Reibkontakt zur zweiten Seite des Leitbandelements aus. Vorteilhaft liegen sich die Reibradeinheit und die Bremsbackeneinheit bezogen auf die Umlaufrichtung gegenüber.

Dabei ist es außerdem vorteilhaft, wenn die Reibradeinheit ein Reibradelement umfasst. Bevorzugt bildet dessen Mantelfläche gegenüber dem Leitbandelement eine Friktionsfläche aus. Es ist außerdem vorteilhaft, wenn eine Drehbewegung des Reibradelements um eine Mittelachse des Reibradelements in eine erste Richtung kraftbeaufschlagt ist und in eine zweite Richtung einen Freilauf ausbildet.

Vorteilhaft weist die Bremsbackeneinheit genau eine Spiegelsymmetrieebene auf. Vorteilhaft liegt eine Mittelachse des Reibradelements in dieser Spiegelsymmetrieebene.

Beispielsweise weist die Mantelfläche des Reibradelements eine Beschichtung mit einem Material auf, welches eine ausreichend hohe Friktion gewährleistet. Beispielsweise ist dieses Material ein Gummimaterial.

Dabei ist es bevorzugt, dass die erste Richtung des Reibradelements gleichgerichtet zur zweiten Umlaufrichtung der Führungsbahn ist. Ebenfalls bevorzugt ist es, dass die zweite Richtung des Reibradelements gleichgerichtet zur ersten Umlaufrichtung der Führungsbahn ist.

Es gilt im Folgenden die Annahme, dass die erste Maximalposition in Bezug auf eine Höhenrichtung des Rückhaltesystems oberhalb der zweiten Maximalposition angeordnet ist. Nachdem ein Benutzer eine veränderte Position des Halteelements eingestellt hat, welche vorliegend nicht die zweite Maximalposition darstellen soll, wirkt die Schwerkraft auf das Halteelement und versucht dieses, in Richtung zur zweiten Maximalposition hin zu bewegen. Durch die mittels des Reibradelements und der Bremsbackeneinheit applizierte Kraft auf das Leitbandelement wird diese unerwünschte Bewegung erfolgreich verhindert. Bei einer gewünschten Verstellung des Halteelements in Richtung zur zweiten Maximalposition hin ist die Friktionsfläche des Reibradelements und/oder der Bremsbackeneinheit jeweils vorteilhaft so ausgeführt, dass die applizierte Reibkraft manuell überwunden werden kann. In Gegenrichtung, also beispielsweise bei einer gewünschten Verstellung des Halteelements nach oben, ist hingegen eine nahezu kraftfreie Verstellung möglich.

Bei einem Crash, also beispielsweise bei einer schlagartigen Verzögerung des Fahrzeugs, wirken starke Kräfte auf das Gurtbandelement, beispielsweise in eine Richtung ausgehend vom Halteelement und wegweisend vom Reibabschnitt des Rückhaltesystems. Dadurch wird die applizierte Reibkraft unmittelbar überwunden. Die Position des Halteelements wird verändert, bis die zweite Maximalposition erreicht wird. Mit anderen Worten wird beispielsweise schlagartig die niedrigste Gurthöhe angefahren. Beispielsweise ist der Fahrzeugsitz so ausgestaltet, dass die Rückenlehne zur Sitzfläche schwenkbar ausgestaltet ist und dass die beiden Maximalpositionen des Halteelements an einem oberen Bereich der Rückenlehne angeordnet sind. Der Hebelarm, den die Rückenlehne in Bezug auf eine Drehung um eine Achse zwischen Rückenlehne und Sitzfläche darstellt, wird also im Crashfall vorteilhaft verkürzt und das in die Sitzachse eingeleitete Drehmoment verringert. Dadurch kann die Rückenstruktur insgesamt kostengünstiger ausgelegt werden.

Um die Wechselwirkung zwischen der Bremsbackeneinheit und der Reibradeinheit zu verbessern, ist es vorteilhaft, wenn die Bremsbackeneinheit ein Bremsbackenelement umfasst. Dieses bildet beispielsweise eine komplementär zu einem Abschnitt der Mantelfläche des Reibradelements ausgestaltete Aussparung aus. Beispielsweise ist diese Aussparung zumindest abschnittsweise bogenförmig ausgestaltet.

Es ist also bevorzugt gewährleistet, dass zumindest ein Teil der Mantelfläche des Reibradelements und zumindest ein Teil einer Oberfläche der Aussparung des Bremsbackenelements einen Abschnitt der Führungsbahn für das Leitbandelement ausbilden.

Bevorzugt bildet eine Oberfläche des Bremsbackenelements gegenüber dem Leitbandelement eine Friktionsfläche aus. Beispielsweise weist die Mantelfläche des Reibradelements eine Beschichtung mit einem Material auf, welches eine ausreichend hohe Friktion gewährleistet. Beispielsweise ist dieses Material ein Gummimaterial.

Das Bremsbackenelement ist vorteilhaft in Bezug auf eine Richtung, welche parallel zum Normalenvektor der beiden Seiten des Leitbandelements angeordnet und zur Mittelachse des Reibradelements weisend ausgestaltet ist, federkraftbeaufschlagt. So sorgt das Bremsbackenelement dafür, dass das Leitbandelement zwischen dem Bremsbackenelement und dem Reibradelement sicher geführt ist. Durch die oben erwähnte Aussparung ist zudem im Zusammenspiel mit der Form des Reibradelements für einen hohen Umschlingungsgrad des Leitbandelements in Bezug auf die Mantelfläche des Reibradelements und der Oberfläche der Aussparung des Bremsbackenelements gesorgt.

Um für eine sichere Führung des Gurtbandelements zu sorgen, ist es ferner vorteilhaft, wenn das Gurtbandelement durch eine Aussparung im ersten Abschnitt des Leitbandelements hindurchgehend geführt ist. Bevorzugt sind die Aussparung des Leitbandelements und die Aussparung des Halteelements, durch welche das Leitbandelement ebenfalls geführt ist, einander überlappend angeordnet. Bevorzugt sind beide Aussparungen gleich groß und/oder kongruent zueinander. Bevorzugt beträgt in einem fertig montierten Zustand des Rückhaltesystems ein Überlappungsgrad zwischen beiden Aussparungen 100%.

Es ist ferner gemäß einem bevorzugten Ausführungsbeispiel vorgesehen, dass eine Längserstreckung der Aussparung des Leitbandelements und/oder eine Längserstreckung der Aussparung des Halteelements zur ersten Umlaufrichtung in einem spitzen Winkel angeordnet sind. Diese Anordnung der Aussparung(en) hat den Vorteil, dass das Gurtbandelement der schrägen Aussparung folgend ergonomisch günstig um den Körper des Sitzinsassen gelegt werden kann.

Außerdem ist es vorteilhaft, wenn eine Erstreckung des Halteelements in eine Richtung parallel zur ersten Umlaufrichtung auf einer ersten Seite größer ist als auf einer zweiten Seite. Die beschriebene asymmetrische Form des Halteelements hat folgenden Vorteil: Das Halteelement ist entsprechend der auftretenden Belastungen (Standard und Crashfall) auf einer ersten Seite stärker ausgestaltet als auf einer zweiten Seite, da die im Standardfall oder im Crashfall auftretenden Kräfte aufgrund der Richtung der Kraft, die auf das Gurtbandelement wirkt, vor allem in den Bereich auf der ersten Seite eingeleitet werden.

Um das Risiko zu minimieren, dass der Sitzinsasse beim Bedienen des Rückhaltesystems Verletzungen, beispielsweise Quetschungen, erleidet, ist es ferner vorteilhaft, wenn zwei Außenflächen des Halteelements jeweils eine Erhebung aufweisen, welche in jeweils einer komplementär dazu ausgestalteten Nut eines das Halteelement umgebenden Rahmenelements geführt ist. Somit ist gewährleistet, dass das Halteelement innerhalb des Rahmenelements vertikal verschiebbar geführt ist. Bevorzugt bildet das Rahmenelement die obere und untere Begrenzung der Verstellbewegung aus. Bevorzugt ist mittels des Rahmenelements die erste und die zweite Maximalposition des Halteelements ausgebildet.

Das Rückhaltesystem wirkt also optisch geschlossen. Durch die geschlossene Ausführung und auch durch die Tatsache, dass die Mechanik hinter dem Tragelement keine Elemente mit hohem Verletzungsrisiko aufweist, ist der aus dem Stand der Technik als kritisch bekannte Quetsch-/Scherbereich nahe der Gurtumlenkung weitestgehend entschärft.

Um die Vorspannung des Leitbandelements weiter zu verbessern, ist es gemäß einem bevorzugten Ausführungsbeispiel vorgesehen, dass in einem ersten Spannabschnitt der Führungsbahn zwischen dem Verstellabschnitt und dem Reibabschnitt eine erste Spannrolle für das Leitbandelement und in einem zweiten Spannabschnitt der Führungsbahn zwischen dem Verstellabschnitt und dem Reibabschnitt eine zweite Spannrolle für das Leitbandelement angeordnet sind, wobei der erste Spannabschnitt und der zweite Spannabschnitt sich gegenüberliegend angeordnet sind.

Bevorzugt umfasst die Führungsbahn entlang ihres Umfangs in dieser Reihenfolge folgende Abschnitte: den ersten Spannabschnitt, den Reibabschnitt, den zweiten Spannabschnitt sowie den Verstellabschnitt (auf welchen aufgrund der geschlossenen Ausgestaltung des Leitbandelements wieder der erste Spannabschnitt folgt).

Es kann vorteilhaft sein, wenn das Leitbandelement wie oben beschrieben als flächiges Band mit rechteckförmigem Querschnitt ausgestaltet ist. Mögliche Varianten sehen vor, dass das Leitbandelement als Keilriemen oder als ein Poly-V-Riemen ausgestaltet ist. Ferner kann es vorteilhaft sein, wenn die Rollen als Riemenscheiben mit einer komplementär zur Form des Leitbandelements ausgestalteten Oberfläche ausgestaltet sind.

Dabei ist eine Position einer oder beider Spannrollen bevorzugt verstellbar, damit bei nachlassender Vorspannung des Leitbandelements dieses wieder auf einfache Weise gespannt werden kann. Die Verstellung der Position einer oder beider Spannrollen erfolgt bevorzugt senkrecht zu einer der Umlaufrichtungen des Leitbandelements.

Durch die vorliegende Ausgestaltung, insbesondere dem kleinen Umlenkradius des Leitbandelements, kann ein minimaler Bauraum des erfindungsgemäßen Rückhaltesystems gewährleistet werden.

Weitere Vorteile, Ziele und Eigenschaften vorliegender Erfindung werden anhand anliegender Zeichnung und nachfolgender Beschreibung erläutert, in welchen beispielhaft Ausführungsformen des erfindungsgemäßen Rückhaltesystems für einen Fahrzeugsitz dargestellt und beschrieben ist. In der Zeichnung zeigen:
- Figur 1: eine Seitenansicht eines Fahrzeugsitzes mit einem schematisch markierten Beispielbereich, in welchem ein Rahmenelement eines erfindungsgemäßen Rückhaltesystems anordenbar ist;
- Figur 2a: eine perspektivische Ansicht einer ersten Ausführungsform des erfindungsgemäßen Rückhaltesystems;
- Figur 2b: eine perspektivische Ansicht des erfindungsgemäßen Rückhaltesystems, gemäß welcher Teile des Rückhaltesystems ausgeblendet sind;
- Figur 3a: eine perspektivische Ansicht des erfindungsgemäßen Rückhaltesystems, gemäß welcher das Halteelement in einer Mittelstellung angeordnet ist;
- Figur 3b: die Ansicht gemäß Fig. 3a, wobei das Halteelement in einer ersten Maximalstellung angeordnet ist;
- Figur 4a: eine schematische Darstellung des erfindungsgemäßen Rückhaltesystems;
- Figur 4b: eine vergrößerte Darstellung der Ansicht gemäß der Fig. 4a;
- Figur 5a: Darstellungen des Halteelements, des Leitbandelements und des Gurtbandelements;
- Figur 5b: Querschnitt gemäß Linie A-A aus Figur 2b.

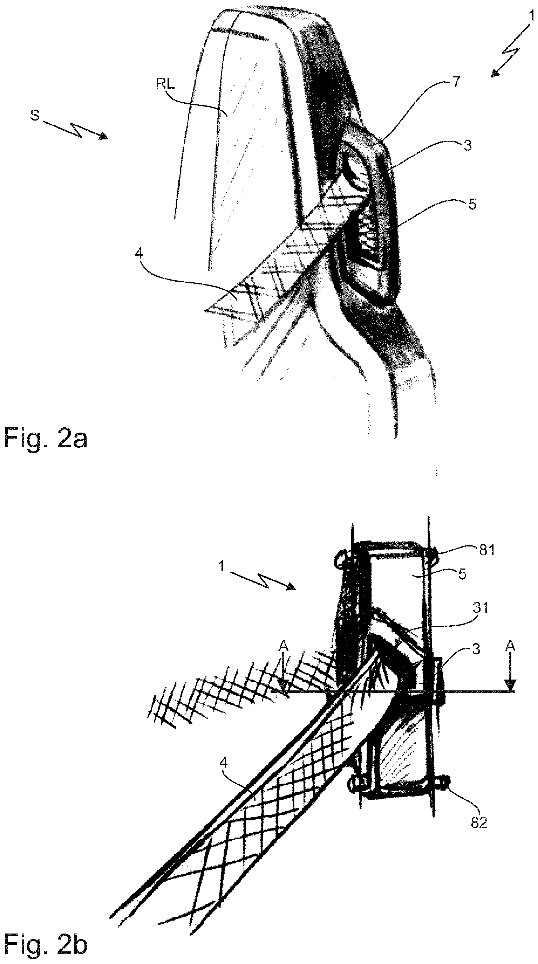

Es sei erwähnt, dass zur besseren Übersichtlichkeit bei den Figuren Teile weggelassen wurden. Die Figur 5b zeigt beispielsweise nicht das Gurtbandelement 4. Die Figuren 2a und 2b zeigen nur Teile des erfindungsgemäßen Rückhaltesystems 1.

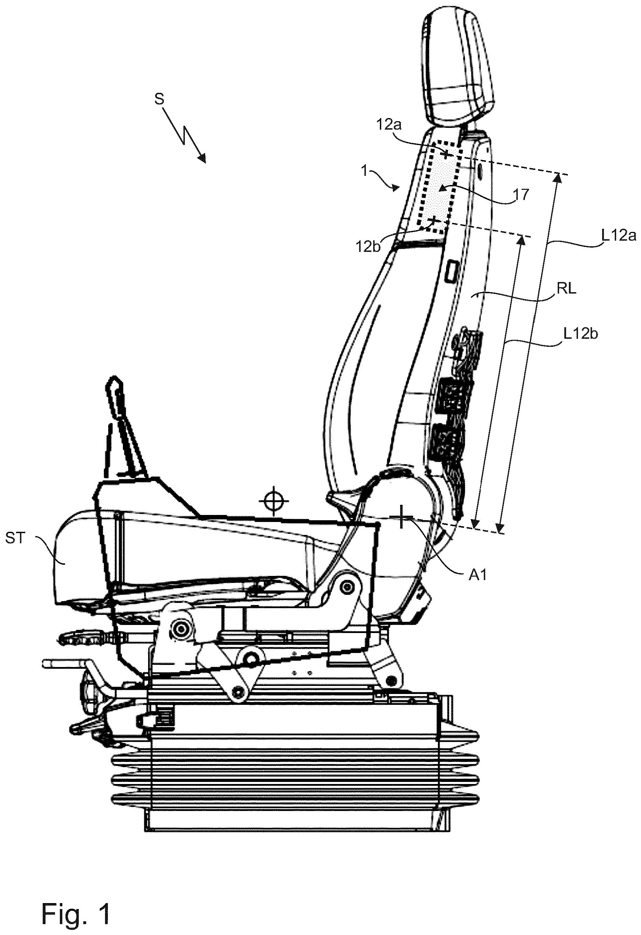

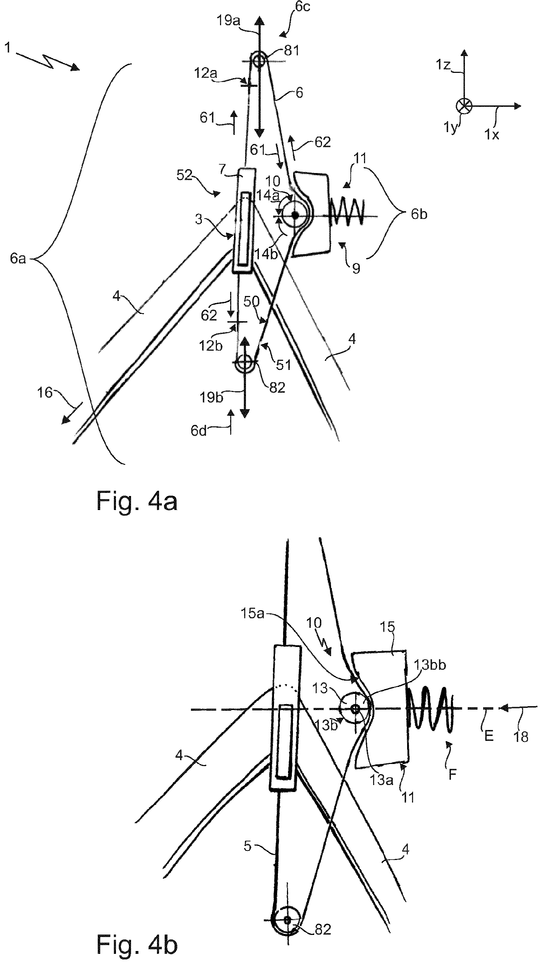

Die Fig. 4a zeigt ein Rückhaltesystem 1 für einen Fahrzeugsitz S (siehe Fig. 1), umfassend ein Gurtbandelement 4 zum Rückhalten eines (nicht gezeigten) Insassen des Fahrzeugsitzes S, weiter umfassend ein Leitbandelement 5, welches auf einer Führungsbahn 6 laufend geführt ist. Das Halteelement 3 ist positionssicher mit einem ersten Abschnitt 52 des Leitbandelements 5 verbunden, wobei das Gurtbandelement 4 durch eine Aussparung 31 (siehe Fig. 5a) des Halteelements 3 hindurchgehend geführt ist. Erfindungsgemäß ist vorgesehen, dass das Leitbandelement 5 in sich geschlossen ist, wobei mittels einer Bewegung des Leitbandelements 5 auf der Führungsbahn 6 in einer ersten Umlaufrichtung 61 das Halteelement 3 innerhalb eines Verstellabschnitts 6a der Führungsbahn 6 stufenlos von einer zweiten 12b bis zu einer ersten Maximalposition 12a verstellbar ist.

Das Leitbandelement 5 weist wie gemäß Fig. 5b gezeigt einen Querschnitt senkrecht zur ersten Umlaufrichtung 61 auf, welcher vorliegend in Form eines Rechtecks ausgestaltet ist. Vorliegend ist eine Breite 5b des Leitbandelements 5 wesentlich größer als eine Höhe 5h des Leitbandelements 5. Dargestellt ist zwar ein eingeschnürter Zustand des Leitbandelements 5 (wie nachfolgend noch genauer erläutert); vorliegend gelten die erwähnten Relationen zwischen den Dimensionen des Querschnitts des Leitbandelements aber auch für den nicht-eingeschnürten Querschnitt des Leitbandelements.

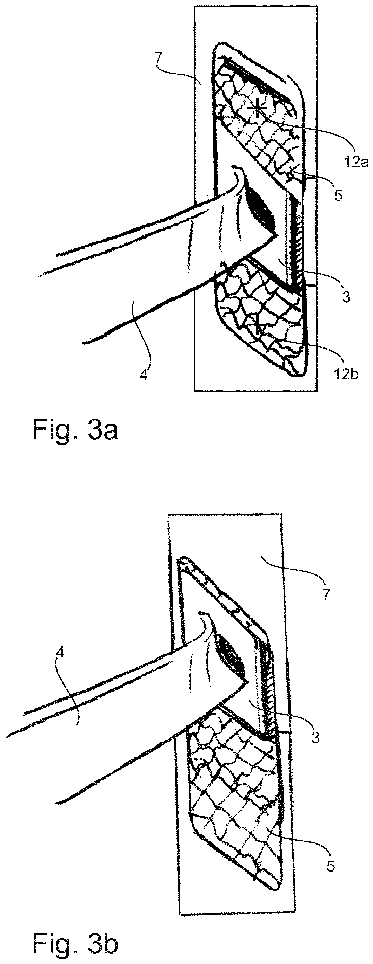

Vorliegend sind alle erdenklichen Positionen des Halteelements 3, welche dieses in Bezug auf einen Verlauf der Führungsbahn 6 annimmt, innerhalb des Verstellabschnitts 6a angeordnet. Gemäß der Fig. 3a ist das Halteelement 3 in einer Position etwa mittig zwischen der ersten 12a und der zweiten Maximalposition 12b angeordnet. Gemäß der Fig. 3b ist das Halteelement 3 in der ersten Maximalposition 12a angeordnet.

Das Halteelement 3 übernimmt die Funktion des Tragelements des Gurtbandelements 4. Dabei ist das Gurtbandelement 4 zwar innerhalb der Aussparung 31 des Halteelements 3 geführt, ansonsten aber zu diesem beweglich ausgestaltet.

Vorliegend erfährt das Halteelement 3 bei einer Verstellung wie oben beschrieben lediglich eine Translationsbewegung und keine Rotationsbewegung. Vorliegend ist die Umlaufrichtung 61 und das Leitbandelement 5 innerhalb des Verstellbereichs 6a geradlinig verlaufend ausgestaltet.

Durch die geschlossene Gestalt des Leitbandelements weist dieses zwei mögliche Umlaufrichtungen 61, 62 auf. Vorliegend sind die beiden Umlaufrichtungen 61, 62 zueinander gegenläufig. Dabei entspricht die zweite Umlaufrichtung 62 in Bezug auf einen Verlauf der Führungsbahn 6 bevorzugt der Richtung von der ersten 12a zur zweiten Maximalposition 12b hin. Ferner entspricht die erste Umlaufrichtung 61 in Bezug auf einen Verlauf der Führungsbahn 6 vorliegend der Richtung von der zweiten 12b zur ersten Maximalposition 12a hin.

Das Leitbandelement 5 ist vorliegend ein Polyesterband und weist eine geringe Dehnbarkeit auf. Auf dem Leitbandelement 5 ist das Halteelement 3 positionssicher montiert (siehe Fig. 5b) und vorliegend mittels einer Klebeverbindung 54 mit beiden Seiten 50, 51 des Leitbandelements 5 verbunden. Zusätzlich umfasst das Halteelement 3 zwei Teile 3a, 3b, wovon der eine 3a auf der ersten Seite 50 des Leitbandelements 5 und der andere 3b auf einer zweiten Seite 51 des Leitbandelements 5 angeordnet ist. Vorliegend sind diese zwei Teile 3a, 3b miteinander mittels einer Clipsverbindung 36 miteinander verbunden.

Vorliegend bildet das Leitbandelement 5 im ersten Abschnitt 52 bei montiertem Halteelement 3 eine Einschnürung seines Querschnitts aus, da das Leitbandelement 5 mittels des Halteelements 3 vorliegend mit einer Kraft in Form einer Flächenpressung beaufschlagt ist.

Das Gurtbandelement 4 weist vorliegend ebenfalls einen rechteckig ausgestalteten Querschnitt auf (siehe Fig. 5a). Die Aussparung 31 im Halteelement 3 für das Gurtbandelement 4 ist vorliegend komplementär zum Querschnitt des Gurtbandelements 4 und rechteckig ausgestaltet.

Die Fig. 4a zeigt ferner, dass die Führungsbahn 6 einen vom Verstellabschnitt 6a getrennt angeordneten Reibabschnitt 6b ausbildet. Vorliegend ist im Reibabschnitt 6b eine Bremseinheit 9 für das Leitbandelement 5 angeordnet. Diese umfasst eine auf der ersten Seite 50 des Leitbandelements 5 angeordnete Reibradeinheit 10 sowie eine auf einer zweiten Seite 51 des Leitbandelements 5 angeordnete und mit der Reibradeinheit 10 wechselwirkbare Bremsbackeneinheit 11.

Die Reibradeinheit 10 bildet vorliegend einen Reibkontakt zur ersten Seite 50 des Leitbandelements 5 aus. Die Bremsbackeneinheit 11 bildet vorliegend einen Reibkontakt zur zweiten Seite 51 des Leitbandelements 5 aus. Vorliegend liegen sich die Reibradeinheit 10 und die Bremsbackeneinheit 11 bezogen auf die Umlaufrichtung 61 gegenüber.

Dabei ist außerdem gezeigt, dass die Reibradeinheit 10 vorliegend ein Reibradelement 13 umfasst. Vorliegend bildet dessen Mantelfläche 13b gegenüber dem Leitbandelement 5 eine Friktionsfläche aus. Vorliegend ist eine Drehbewegung des Reibradelements 13 um eine Mittelachse 13a des Reibradelements 13 in eine erste Richtung 14a kraftbeaufschlagt und bildet in eine zweite Richtung 14b einen Freilauf aus.

Vorliegend weist die Bremsbackeneinheit 11 genau eine Spiegelsymmetrieebene E1 (siehe Fig. 4b) auf. Vorliegend liegt eine Mittelachse 13a des Reibradelements 13 in dieser Spiegelsymmetrieebene E1.

Gemäß Fig. 4a ist gezeigt, dass die erste Richtung 14a des Reibradelements 13 gleichgerichtet zur zweiten Umlaufrichtung 62 der Führungsbahn 6 ist. Ebenfalls gezeigt ist, dass die zweite Richtung 14b des Reibradelements 13 gleichgerichtet zur ersten Umlaufrichtung 61 der Führungsbahn 6 ist.

Die erste Maximalposition 12a ist vorliegend in Bezug auf eine Höhenrichtung 1z des Rückhaltesystems 1 oberhalb der zweiten Maximalposition 12b angeordnet. Gemäß der Fig. 4a ist das Halteelement 3 an einer Position zwischen der ersten Maximalposition 12a und der zweiten Maximalposition 12b angeordnet. Es wirkt die Schwerkraft auf das Halteelement 3 und versucht dieses, in Richtung zur zweiten Maximalposition 12b hin zu bewegen. Durch die mittels des Reibradelements 13 und der Bremsbackeneinheit 11 applizierte Kraft auf das Leitbandelement 5 wird diese unerwünschte Bewegung erfolgreich verhindert. Bei einer gewünschten Verstellung des Halteelements 3 in Richtung zur zweiten Maximalposition hin 12b ist die Friktionsfläche des Reibradelements 13 und der Bremsbackeneinheit 11 jeweils vorliegend so ausgeführt, dass die applizierte Reibkraft manuell überwunden werden kann. In Gegenrichtung, also bei einer gewünschten Verstellung des Halteelements 3 nach oben, ist hingegen eine nahezu kraftfreie Verstellung möglich.

Bei einem Crash wirken starke Kräfte auf das Gurtbandelement 4, beispielsweise in eine Richtung 16 (siehe Fig. 4a) ausgehend vom Halteelement 3 und wegweisend vom Reibabschnitt 6b des Rückhaltesystems 1. Dadurch wird die applizierte Reibkraft unmittelbar überwunden. Die Position des Halteelements 3 wird verändert, bis die zweite Maximalposition 12b erreicht wird. Gemäß Fig. 1 ist der Fahrzeugsitz S so ausgestaltet, dass die Rückenlehne RL zur Sitzfläche des Sitzteils ST schwenkbar ausgestaltet ist und dass die beiden Maximalpositionen 12a, 12b des Halteelements 3 an einem oberen Bereich 17 der Rückenlehne RL angeordnet sind. Der Hebelarm, den die Rückenlehne RL in Bezug auf eine Drehung um eine Achse A1 zwischen Rückenlehne RL und Sitzfläche oder Sitzteil ST darstellt, wird also im Crashfall verkürzt, und das in die Sitzachse A1 eingeleitete Drehmoment verringert. Gezeigt ist zur Veranschaulichung die maximale Länge L12a des Hebelarms, wenn das Halteelement 3 in seiner ersten Maximalposition 12a angeordnet ist, und die minimale Länge 12b des Hebelarms, wenn das Halteelement 3 in seiner zweiten Maximalposition 12b angeordnet ist.

Vorliegend ist es vorgesehen, dass die Bremsbackeneinheit 11 ein Bremsbackenelement 15 umfasst. Dieses bildet vorliegend eine komplementär zu einem Abschnitt 13bb der Mantelfläche 13b des Reibradelements 13 ausgestaltete Aussparung 15a aus. Vorliegend ist diese Aussparung 15a zumindest abschnittsweise bogenförmig ausgestaltet.

Es ist also vorliegend gewährleistet, dass zumindest ein Teil der Mantelfläche 13b des Reibradelements 13 und zumindest ein Teil einer Oberfläche der Aussparung 15a des Bremsbackenelements 15 einen Abschnitt der Führungsbahn 6 für das Leitbandelement 5 ausbilden.

Das Bremsbackenelement 15 ist vorliegend in Bezug auf eine Richtung 18 (siehe Fig. 4b), welche parallel zum Normalenvektor der beiden Seiten 50, 51 des Leitbandelements 5 angeordnet und zur Mittelachse 13a des Reibradelements 13 weisend ausgestaltet ist, mittels eines Federelements F federkraftbeaufschlagt.

Gemäß der Fig. 5a ist das Gurtbandelement 4 in einem Querschnitt sowie das Halteelement 3 und das Leitbandelement 5 jeweils in einem nicht-montierten Zustand des Rückhaltesystems 1 gezeigt; es liegen also Einzelansichten der Elemente 3, 4 und 5 vor. Im fertig montierten Zustand (siehe beispielsweise Fig. 4a) des Rückhaltesystems 1 ist vorliegend gewährleistet, dass das Gurtbandelement 4 durch eine Aussparung 53 (siehe Fig. 5a) im ersten Abschnitt 52 des Leitbandelements 5 hindurchgehend geführt ist. Vorliegend sind die Aussparung 53 des Leitbandelements 5 und die Aussparung 31 des Halteelements 3, durch welche das Leitbandelement 5 ebenfalls geführt ist, einander überlappend angeordnet. Ferner sind vorliegend beide Aussparungen 31, 53 gleich groß und kongruent zueinander. Im fertig montierten Zustand des Rückhaltesystems 1 beträgt ein Überlappungsgrad zwischen beiden Aussparungen 31, 53 vorliegend 100%.

Gemäß der Fig. 5a ist außerdem veranschaulicht, dass eine Längserstreckung der Aussparung 53 des Leitbandelements 5 und eine Längserstreckung der Aussparung 31 des Halteelements 3 zur ersten Umlaufrichtung 61 in einem spitzen Winkel angeordnet sind.

Außerdem ist gezeigt, dass eine Erstreckung des Halteelements 3 in eine Richtung 3z parallel zur ersten Umlaufrichtung 61 auf einer ersten Seite 32 größer ist als auf einer zweiten Seite 33.

Außerdem weisen zwei Außenflächen 34, 35 des Halteelements 3 jeweils eine Erhebung 30 auf, welche in jeweils einer komplementär dazu ausgestalteten Nut 71 eines das Halteelement 3 umgebenden Rahmenelements 7 geführt ist. Somit ist gewährleistet, dass das Halteelement 3 innerhalb des Rahmenelements 7 vertikal verschiebbar geführt ist. Vorliegend bildet das Rahmenelement 7 die obere und untere Begrenzung der Verstellbewegung aus. Außerdem ist mittels des Rahmenelements 3 die erste 12a und die zweite Maximalposition 12b des Halteelements 3 ausgebildet (siehe hier Fig. 2a).

Die Fig. 4a zeigt, dass in einem ersten Spannabschnitt 6c der Führungsbahn 6 zwischen dem Verstellabschnitt 6a und dem Reibabschnitt 6b eine erste Spannrolle 81 für das Leitbandelement 5 und in einem zweiten Spannabschnitt 6d der Führungsbahn 6 zwischen dem Verstellabschnitt 6a und dem Reibabschnitt 6b eine zweite Spannrolle 82 für das Leitbandelement 5 angeordnet sind, wobei der erste Spannabschnitt 6c und der zweite Spannabschnitt 6d sich gegenüberliegend angeordnet sind.

Vorliegend unfasst die Führungsbahn 6 entlang ihres Umfangs in dieser Reihenfolge folgende Abschnitte: den ersten Spannabschnitt 6c, den Reibabschnitt 6a, den zweiten Spannabschnitt 6d sowie den Verstellabschnitt 6a, auf welchen aufgrund der geschlossenen Ausgestaltung des Leitbandelements 5 wieder der erste Spannabschnitt 6c folgt. Diese Reihenfolge ist anhand der Fig. 4a vorliegend in eine Richtung der Führungsbahn 6 im Uhrzeigersinn veranschaulicht.

Dabei ist eine Position beider Spannrollen 81, 82 vorliegend verstellbar. Die Verstellung der Position beider Spannrollen erfolgt vorliegend jeweils senkrecht zu einer der Umlaufrichtungen 61, 62 der Führungsbahn 6 und sind anhand der mit Doppelpfeilen markierten Richtungen 19a, 19b in der Fig. 4a veranschaulicht.

Es versteht sich, dass es sich bei dem vorstehend erläuterten Ausführungsbeispiel lediglich um eine erste Ausgestaltung des erfindungsgemäßen Rückhaltesystems 1 handelt. Insofern beschränkt sich die Ausgestaltung der Erfindung nicht auf dieses Ausführungsbeispiel.

Sämtliche in den Anmeldungsunterlagen offenbarten Merkmale werden als erfindungswesentlich beansprucht, sofern sie einzeln oder in Kombination gegenüber dem Stand der Technik neu sind und sofern sie nicht über den Rahmen der Ansprüche hinausgehen.

### Bezugszeichenliste

- 1: Rückhaltesystem
- 3: Halteelement
- 3a, 3b: Teil
- 3z, 16, 18, 19a, 19b: Richtung
- 4: Gurtbandelement
- 5: Leitbandelement
- 5b: Breite
- 5h: Höhe
- 6: Führungsbahn
- 6a: Verstellabschnitt
- 6b: Reibabschnitt
- 6c, 6d: Spannabschnitt
- 7: Rahmenelement
- 9: Bremseinheit
- 10: Reibradeinheit
- 11: Bremsbackeneinheit
- 12a, 12b: Maximalposition
- 13: Reibradelement
- 13a: Mittelachse
- 13b: Mantelfläche
- 13bb, 52: Abschnitt
- 14a, 14b: Richtung
- 15: Bremsbackenelement
- 15a, 31, 53: Aussparung
- 17: Bereich
- 30: Erhebung
- 32, 33, 50, 51: Seite
- 34, 35: Außenfläche
- 36, 54: Verbindung
- 61, 62: Umlaufrichtung
- 71: Nut
- 81, 82: Spannrolle
- A1: Achse
- E: Spiegelsymmetrieebene
- F: Federelement
- L12a, L12b: Länge
- RL: Rückenlehne
- S: Fahrzeugsitz
- ST: Sitzteil
- W: Winkel

## Patentansprüche

1. Rückhaltesystem (1) für einen Fahrzeugsitz (S),
umfassend ein Gurtbandelement (4) zum Rückhalten eines Insassen des Fahrzeugsitzes (S),
weiter umfassend ein Leitbandelement (5), welches auf einer Führungsbahn (6) laufend geführt ist, wobei ein Halteelement (3) positionssicher mit einem ersten Abschnitt (52) des Leitbandelements (5) verbunden ist,
wobei das Gurtbandelement (4) durch eine Aussparung (31) des Halteelements (3) hindurchgehend geführt ist,
wobei mittels einer Bewegung des in sich geschlossenen Leitbandelements (5) auf der Führungsbahn (6) in einer ersten Umlaufrichtung (61) das Halteelement (3) innerhalb eines Verstellabschnitts (6a) der Führungsbahn (6) stufenlos von einer zweiten (12b) bis zu einer ersten Maximalposition (12a) verstellbar ist, wobei die Führungsbahn (6) einen vom Verstellabschnitt (6a) getrennt angeordneten Reibabschnitt (6b) ausbildet,
wobei im Reibabschnitt (6b) eine Bremseinheit (9) für das Leitbandelement (5) angeordnet ist, welche eine auf einer ersten Seite (50) des Leitbandelements (5) angeordnete Reibradeinheit (10) sowie eine auf einer zweiten Seite (51) des Leitbandelements (5) angeordnete und mit der Reibradeinheit (10) wechselwirkbare Bremsbackeneinheit (11) umfasst.

2. Rückhaltesystem (1) nach Anspruch 1,
**dadurch gekennzeichnet, dass**
die Reibradeinheit (10) ein Reibradelement (13) umfasst, dessen Mantelfläche (13b) gegenüber dem Leitbandelement (5) eine Friktionsfläche ausbildet, wobei eine Drehbewegung des Reibradelements (13) um eine Mittelachse (13a) des Reibradelements (13) in eine erste Richtung (14a) kraftbeaufschlagt ist und in eine zweite Richtung (14b) einen Freilauf ausbildet.

3. Rückhaltesystem (1) nach einem der Ansprüche 1 bis 2,
**dadurch gekennzeichnet, dass**
die Bremsbackeneinheit (11) ein Bremsbackenelement (15) umfasst, welches eine komplementär zu einem Abschnitt (13bb) der Mantelfläche (13b) des Reibradelements (13) ausgestaltete Aussparung (15a) ausbildet.

4. Rückhaltesystem (1) nach einem der vorhergehenden Ansprüche,
**dadurch gekennzeichnet, dass**
das Gurtbandelement (4) durch eine Aussparung (53) im ersten Abschnitt (52) des Leitbandelements (5) hindurchgehend geführt ist, und/oder dass die Aussparung (53) des Leitbandelements (5) und die Aussparung (31) des Halteelements (3) einander überlappend angeordnet sind.

5. Rückhaltesystem (1) nach Anspruch 4,
**dadurch gekennzeichnet, dass**
eine Längserstreckung der Aussparung (53) des Leitbandelements (5) und/oder eine Längserstreckung der Aussparung (31) des Halteelements (3) zur ersten Umlaufrichtung (61) in einem spitzen Winkel (W) angeordnet sind, und/oder dass eine Erstreckung des Halteelements (3) in eine Richtung (3z) parallel zur ersten Umlaufrichtung (61) auf einer ersten Seite (32) größer ist als auf einer zweiten Seite (33).

6. Rückhaltesystem (1) nach einem der vorhergehenden Ansprüche,
**dadurch gekennzeichnet, dass**
zwei Außenflächen (34, 35) des Halteelements (3) jeweils eine Erhebung (30) aufweisen, welche in jeweils einer komplementär dazu ausgestalteten Nut (71) eines das Halteelement (3) umgebenden Rahmenelements (7) geführt ist.

7. Rückhaltesystem (1) nach einem der vorhergehenden Ansprüche,
**dadurch gekennzeichnet, dass**
in einem ersten Spannabschnitt (6c) der Führungsbahn (6) zwischen dem Verstellabschnitt (6a) und dem Reibabschnitt (6b) eine erste Spannrolle (81) für das Leitbandelement (5) und in einem zweiten Spannabschnitt (6d) der Führungsbahn (6) zwischen dem Verstellabschnitt (6a) und dem Reibabschnitt (6b) eine zweite Spannrolle (82) für das Leitbandelement (5) angeordnet sind, wobei der erste Spannabschnitt (6c) und der zweite Spannabschnitt (6d) sich gegenüberliegend angeordnet sind.

## Claims

1. Restraint system (1) for a vehicle seat (S),
comprising a webbing belt element (4) for restraining an occupant of the vehicle seat (S),
further comprising a guide belt element (5) which is guided continuously on a guideway (6), a holding element (3) being positionally secure connected to a first section (52) of the guide belt element (5),
wherein the webbing belt element (4) is guided passing through a cutout (31) in the holding element (3), wherein
by means of a movement of the self-contained guide belt element (5) on the guideway (6) in a first direction of rotation (61), the holding element (3) is continuously adjustable within an adjustment section (6a) of the guideway (6) from a second maximum position (12b) to a first maximum position (12a), wherein the guideway (6) forms a friction section (6b) arranged separately from the adjustment section (6a), wherein in the friction section (6b) a braking unit (9) for the guide belt element (5) is arranged which comprises a friction wheel unit (10) arranged on a first side (50) of the guide belt element (5) and a brake shoe unit (11) which is arranged on a second side (51) of the guide belt element (5) and which can interact with the friction wheel unit (10).

2. Restraint system (1) according to claim 1,
**characterised in that**
the friction wheel unit (10) comprises a friction wheel element (13), the outer surface (13b) of which forms a friction surface with respect to the guide belt element (5), wherein a rotational movement of the friction wheel element (13) around a central axis (13a) of the friction wheel element (13) is acted upon by a force in a first direction (14a) and forms a freewheel in a second direction (14b).

3. Restraint system (1) according to any one of claims 1 and 2,
**characterised in that**
the brake shoe unit (11) comprises a brake shoe element (15) which forms a cutout (15a) designed to be complementary to a section (13bb) of the outer surface (13b) of the friction wheel element (13).

4. Restraint system (1) according to one of the preceding claims,
**characterised in that**
the webbing belt element (4) is guided passing through a cutout (53) in the first section (52) of the guide belt element (5), and/or that the cutout (53) of the guide belt element (5) and the cutout (31) of the holding element (3) are arranged to overlap one another.

5. Restraint system (1) according to claim 4,
**characterised in that**
a longitudinal extension of the cutout (53) of the guide belt element (5) and/or a longitudinal extension of the cutout (31) of the holding element (3) are arranged at an acute angle (W) relative to the first direction of rotation (61), and/or that an extent of the holding element (3) in a direction (3z) parallel to the first direction of rotation (61) is greater on a first side (32) than on a second side (33).

6. Restraint system (1) according to one of the preceding claims,
**characterised in that**
two exterior surfaces (34, 35) of the holding element (3) each have an elevation (30), each of which is guided in a complementary groove (71) of a frame element (7) surrounding the holding element (3).

7. Restraint system (1) according to one of the preceding claims,
**characterised in that**
a first tensioning roller (81) for the guide belt element (5) is arranged in a first tensioning section (6c) of the guideway (6) between the adjustment section (6a) and the friction section (6b), and a second tensioning roller (82) for the guide belt element (5) is arranged in a second tensioning section (6d) of the guideway (6) between the adjustment section (6a) and the friction section (6b), the first tensioning section (6c) and the second tensioning section (6d) being arranged opposite one another.

## Revendications

1. Système de retenue (1) pour un siège de véhicule (S),
comportant un élément sangle (4) pour retenir un occupant du siège de véhicule (S), comportant en outre un élément courroie de guidage (5), lequel est guidé en continu sur une voie de guidage (6), un élément de maintien (3) étant relié de manière assurée en position à une première section (52) de l'élément courroie de guidage (5), l'élément sangle (4) étant guidé en passant à travers un évidement (31) de l'élément de maintien (3),
où, au moyen d'un mouvement de l'élément courroie de guidage (5) fermé sur lui-même sur la voie de guidage (6) dans un premier sens de rotation (61), l'élément de maintien (3) est réglable en continu à l'intérieur d'une section de réglage (6a) de la voie de guidage (6) d'une seconde position maximale (12b) à une première position maximale (12a), la voie de guidage (6) formant une section de frottement (6b) disposée de façon séparée de la section de réglage (6a), où, dans la section de frottement (6b), est disposée une unité de freinage (9) pour l'élément courroie de guidage (5), laquelle comporte une unité roue de friction (10) disposée sur un premier côté (50) de l'élément courroie de guidage (5) ainsi qu'une unité patin de frein (11) disposée sur un second côté (51) de l'élément courroie de guidage (5) et apte à interagir avec l'unité roue de friction (10).

2. Système de retenue (1) selon la revendication 1,
**caractérisé par le fait que**
l'unité roue de friction (10) comporte un élément roue de friction (13), dont la surface d'enveloppe (13b) forme une surface de friction par rapport à l'élément courroie de guidage (5), un mouvement de rotation de l'élément roue de friction (13) autour d'un axe central (13a) de l'élément roue de friction (13) étant sollicité par une force dans une première direction (14a) et formant une roue libre dans une seconde direction (14b).

3. Système de retenue (1) selon l'une des revendications 1 et 2,
**caractérisé par le fait que**
l'unité patin de frein (11) comporte un élément patin de frein (15), lequel forme un évidement (15a) conçu de façon complémentaire à une section (13bb) de la surface d'enveloppe (13b) de l'élément roue de friction (13).

4. Système de retenue (1) selon l'une des revendications précédentes,
**caractérisé par le fait que**
l'élément sangle (4) est guidé en passant à travers un évidement (53) dans la première section (52) de l'élément courroie de guidage (5) et/ou **par le fait que** l'évidement (53) de l'élément courroie de guidage (5) et l'évidement (31) de l'élément de maintien (3) sont disposés de manière à se chevaucher.

5. Système de retenue (1) selon la revendication 4,
**caractérisé par le fait qu'**
une extension longitudinale de l'évidement (53) de l'élément courroie de guidage (5) et/ou une extension longitudinale de l'évidement (31) de l'élément de maintien (3) sont disposées selon un angle aigu (W) par rapport à la première direction périphérique (61), et/ou **par le fait qu'**une extension de l'élément de maintien (3) dans une direction (3z) parallèle à la première direction périphérique (61) est plus grande sur un premier côté (32) que sur un second côté (33).

6. Système de retenue (1) selon l'une des revendications précédentes,
**caractérisé par le fait que**
deux surfaces extérieures (34, 35) de l'élément de maintien (3) présentent chacune une saillie (30), laquelle est guidée dans une rainure respective (71) conçue de forme complémentaire à celle-ci d'un élément cadre (7) entourant l'élément de maintien (3).

7. Système de retenue (1) selon l'une des revendications précédentes,
**caractérisé par le fait qu'**
un premier rouleau de tension (81) pour l'élément courroie de guidage (5) est disposé dans une première section de mise en tension (6c) de la voie de guidage (6) entre la section de réglage (6a) et la section de frottement (6b), et un second rouleau de tension (82) pour l'élément courroie de guidage (5) est disposé dans une seconde section de mise en tension (6d) de la voie de guidage (6) entre la section de réglage (6a) et la section de frottement (6b), la première section de mise en tension (6c) et la seconde section de mise en tension (6d) étant disposées l'une en face de l'autre.
